# EUROPEAN PATENT SPECIFICATION

(11) **EP 3 832 801 B1**
(45) Date of publication and mention of the grant of the patent: **17.01.2024**
(21) Application number: 19870347.2
(22) Date of filing: 06.03.2019
(51) Int. Cl.: H01Q 1/22, H01Q 5/378, H01Q 9/04, G06K 19/07

(54) **ELECTRONIC APPARATUS**
ELEKTRONISCHE VORRICHTUNG
APPAREIL ÉLECTRONIQUE

(30) Priority: 10.10.2018 JP 2018191715
(43) Date of publication of application: 09.06.2021
(73) Proprietor: OMRON Corporation, Shiokoji-dori, Shimogyo-ku, Kyoto-shi Kyoto 600-8530 (JP)
(72) Inventor: NOSAKA, Tetsuya, Kyoto-shi, Kyoto 600-8530 (JP); OBATA, Junji, Kyoto-shi, Kyoto 600-8530 (JP); YASE, Satoshi, Kyoto-shi, Kyoto 600-8530 (JP); SUGANO, Masayuki, Kyoto-shi, Kyoto 600-8530 (JP); NOGAMI, Hidekatsu, Kyoto-shi, Kyoto 600-8530 (JP)
(74) Representative: Isarpatent
(86) International application number: PCT/JP2019/008875
(87) International publication number: WO 2020/075320

(56) References cited:
- EP-A2- 1 108 616
- JP-A- H0 590 828
- JP-A- 2003 318 638
- JP-A- 2008 009 537
- JP-A- 2010 063 017
- JP-A- 2012 253 699
- US-A1- 2008 309 578
- US-A1- 2008 309 578
- US-A1- 2012 169 562
- US-A1- 2017 125 919

## Description

### TECHNICAL FIELD

The present invention relates to an electronic apparatus.

### BACKGROUND ART

Data transfer based on radio communication technologies has been made for management of physical distribution or products. One of the radio communication technologies is radio frequency identification (RFID), for example. Patent Documents 1 and 2 disclose a technique for reducing a size of a radio communication antenna between an RFID tag and a reader and increasing antenna characteristics such as an increase in antenna gain and an increase in frequency range over which radio waves are transmitted and received between the tag and reader. Further, Patent Document 3 discloses a technique for causing an antenna to receive radio waves, converting the radio waves thus received into DC power, and supplying the DC power to a load such as a sensor.

### PRIOR ART DOCUMENTS

### PATENT DOCUMENTS

Patent Document 1: Japanese Patent No. 4618459
Patent Document 2: Japanese Patent No. 5526779
Patent Document 3: Japanese Patent No. 6332484

US 2008/309578 A1 relates to an antenna based on proximity coupling between a short-ended microstrip feed line and a radiation patch, an RFID tag including the planar antenna, and an antenna impedance matching method thereof.

EP 1 108 616 A2 relates to a planar microstrip antenna for motor-vehicle systems suitable for cellular telephony, and especially for systems operating in dual band resonance frequency, as well as for applications other than telephony.

US 2017/125919 A1 relates to a polarized antenna including a load board, a first radiation plate, M pieces of feeding part and N pieces of grounded part.

### SUMMARY OF THE INVENTION

### PROBLEMS TO BE SOLVED BY THE INVENTION

It is conceivable to combine the antenna disclosed in Patent Documents 1 and 2 and the technique disclosed in Patent Document 3 to manufacture an RFID tag including a sensor that detects a predetermined physical quantity. However, when the sensor is mounted on the RFID tag, a circuit board for the sensor or an integrated circuit (IC) for the sensor is also mounted on the RFID tag. It is therefore conceivable that the gain of the antenna may decrease or an impedance mismatch may occur due to an object mounted on the RFID tag and located near the antenna such as the IC or the circuit board, mainly due to metal. Further, noise generated by heat or electromagnetic waves emitted from the circuit board for the sensor, the IC for the sensor, or the sensor itself may adversely affect the characteristics of the antenna mounted on the RFID tag.

That is, the inventors have found out that it is impossible to reduce, while suppressing deterioration of antenna characteristics, a size of an electronic apparatus known in the related art, the electronic apparatus including an antenna, an element, and a circuit board on which the element is mounted, the element or the circuit board being provided near the antenna.

An aspect of the present invention has been made in view of such circumstances, and it is therefore an object of the present invention to provide a technique for reducing, while suppressing deterioration of antenna characteristics, a size of an electronic apparatus including an antenna, an element, and a circuit board on which the element is mounted, the element or the circuit board being provided near the antenna.

### MEANS FOR SOLVING THE PROBLEM

The present invention employs the following configuration in order to solve the above-described problems.

Specifically, an electronic apparatus according to an aspect of the present invention includes an electronic apparatus according to claim 1.

According to this configuration, the radio waves radiated from the first antenna element and the radio waves radiated from the second antenna element are superimposed to increase a gain. In other words, even when a component such as the predetermined element or the circuit board has adverse effects of deteriorating antenna characteristics, such as a reduction in antenna gain and an impedance mismatch, the configuration relatively reduces such adverse effects. Further, according to the configuration, an adverse effect, on the antenna characteristics, of noise generated by electromagnetic waves or heat emitted from the predetermined element or the circuit board is relatively reduced.

Further, according to the configuration, the first antenna element is placed inside the second antenna element. This brings the electronic apparatus down in profile. That is, even when the element or the circuit board on which the element is mounted is provided near the antenna, the configuration allows a reduction in size of the electronic apparatus while suppressing deterioration of the antenna characteristics.

Further, according to the configuration, when the radio waves received via the first antenna element or the second antenna element are converted into DC power, the DC power can be supplied to the predetermined element mounted on the circuit board. In other words, the configuration need not include a battery used for bringing the element into operation. This allows a reduction in size of the electronic apparatus.

In the electronic apparatus according to the aspect, the short-circuit member is a plate-shaped member, and the short-circuit member may be provided on sides of the ground plate and the radiation plate.

According to this configuration, the antenna gain increases over a wide frequency range. In other words, even when a component such as the predetermined element or the circuit board has adverse effects of deteriorating antenna characteristics, such as a reduction in antenna gain and an impedance mismatch, the configuration relatively reduces such adverse effects. Further, an adverse effect, on the antenna characteristics, of noise generated by electromagnetic waves or heat emitted from the predetermined element or the circuit board is relatively reduced. That is, even when the element or the circuit board on which the element is mounted is provided near the antenna, it is possible to reduce the size of the electronic apparatus while suppressing deterioration of the antenna characteristics.

In the electronic apparatus according to the aspect, the short-circuit member may be a pole-shaped member.

According to this configuration, the radio waves radiated from the first antenna element and the radio waves radiated from the second antenna element are superimposed to increase the antenna gain. In other words, even when a component such as the predetermined element or the circuit board has adverse effects of deteriorating antenna characteristics, such as a reduction in antenna gain and an impedance mismatch, the configuration relatively reduces such adverse effects. Further, according to the configuration, an adverse effect, on the antenna characteristics, of noise generated by electromagnetic waves or heat emitted from the predetermined element or the circuit board is relatively reduced.

Further, according to the configuration, the first antenna element is placed inside the second antenna element. This brings the electronic apparatus down in profile. That is, even when the element or the circuit board on which the element is mounted is provided near the antenna, the configuration allows a reduction in size of the electronic apparatus while suppressing deterioration of the antenna characteristics.

Further, according to the configuration, when the radio waves received via the first antenna element or the second antenna element are converted into DC power, the DC power can be supplied to the element mounted on the circuit board. In other words, the configuration need not include a battery used for bringing the element into operation. This allows a reduction in size of the electronic apparatus.

In the electronic apparatus according to the aspect, the radiation plate includes a cut-out portion, and when the first antenna element is viewed from a position where the radiation plate is provided, the first antenna element may be provided behind the cut-out portion.

This configuration where the radiation plate includes the cut-out portion allows the radiation plate to have a longer current path. Therefore, the radio waves radiated from the first antenna element and the second antenna element produce resonance at a predetermined frequency and produce secondary resonance at a frequency different from the resonance frequency. That is, the antenna gain increases over a wide frequency range. Therefore, the configuration allows a reduction in size of the electronic apparatus while suppressing deterioration of the antenna characteristics.

In the electronic apparatus according to the aspect, the circuit board may be provided inside the second antenna element, the circuit board having an underside in contact with a surface of the ground plate, the underside being opposite from a mounting surface on which the predetermined element is mounted, the predetermined element may be mounted on the mounting surface of the circuit board, the first antenna element may be provided integrally with the predetermined element, and the predetermined element may be configured to perform signal processing on a signal transmitted and received via the first antenna element.

According to the configuration, the circuit board, the predetermined element, and the first antenna element are placed inside the second antenna element. This brings the electronic apparatus down in profile.

Further, according to the configuration, since the first antenna element and the predetermined element are integrally provided, the first antenna element and the predetermined element are mounted on the circuit board by a single action. Therefore, the configuration allows a reduction in manufacturing cost.

In the electronic apparatus according to the aspect, the circuit board may be provided inside the second antenna element, the circuit board having an underside in contact with a surface of the ground plate, the underside being opposite from a mounting surface on which the predetermined element is mounted, and the first antenna element may be provided on the mounting surface of the circuit board.

This configuration allows a reduction in manufacturing cost of the first antenna element. Further, the resultant reduction in height of the first antenna element from the mounting surface of the circuit board allows a reduction in profile of the second antenna element in which the first antenna element is placed. That is, this allows a reduction in size of the electronic apparatus.

In the electronic apparatus according to the aspect, the circuit board may be provided on an outside of the second antenna element, the circuit board having an underside in contact with a surface of the ground plate, the underside being opposite from a mounting surface on which the predetermined element is mounted.

According to this configuration, a distance between the first antenna element and the circuit board is larger. Therefore, when a component such as the predetermined element or the circuit board has adverse effects of deteriorating the antenna characteristics, such as a reduction in antenna gain and an impedance mismatch, the configuration reduces such adverse effects. Further, an adverse effect, on the first antenna element, of noise generated by heat emitted from the circuit board is reduced. Further, a distance between the first antenna element and the predetermined element is larger. Therefore, an adverse effect, on the first antenna element, of noise generated by electromagnetic waves or heat emitted from the predetermined element is reduced. Therefore, deterioration of the antenna characteristics of the electronic apparatus is suppressed.

The electronic apparatus according to the aspect may further include a conductor in contact with the ground plate.

This configuration causes the radio waves radiated from the first antenna element to intensively transmit toward the radiation plate of the second antenna element. Therefore, the radio waves radiated from the first antenna element and the radio waves radiated from the second antenna element are superimposed to increase the antenna gain. Further, the configuration causes the radio waves radiated from the antenna elements to produce resonance at a predetermined frequency and produce secondary resonance at a frequency different from the resonance frequency. That is, the antenna gain increases over a wide frequency range.

Further, in the electronic apparatus according to the aspect, the radiation plate is larger in size than the ground plate.

According to this configuration, the radio waves radiated from the first antenna element and the radio waves radiated from the second antenna element are superimposed to increase the antenna gain. Therefore, deterioration of the antenna characteristics is suppressed.

In the electronic apparatus according to a configuration not forming part of the invention, the radiation plate may be smaller in size than the ground plate.

Since this configuration causes the radio waves radiated from the first antenna element and the radio waves radiated from the second antenna element to be superimposed to increase the antenna gain, even when the second antenna element is reduced in area, deterioration of the antenna characteristics due to the reduction in area is relatively reduced. That is, the configuration allows a reduction in size of the electronic apparatus through the reduction in area of the antenna element while suppressing deterioration of the antenna characteristics of the electronic apparatus. Further, according to the configuration, characteristics of the antenna gain are more stable even when conditions such as a material and size of a member on which the antenna is installed change. Therefore, the configuration is applicable regardless of the conditions such as the material and size of the member on which the antenna is installed.

In the electronic apparatus according to the aspect, the ground plate may be attached to a casing of an electronic apparatus outside a system, and the ground plate may be detachably attached to the electronic apparatus outside the system.

This configuration allows the electronic apparatus to be attached to and detached from the electronic apparatus outside the system as needed. That is, the configuration is highly convenient.

In the electronic apparatus according to the aspect, the electronic apparatus outside the system may include a second conductor, and the ground plate and the second conductor may be electrically connected to each other.

This configuration causes the radio waves radiated from the first antenna element to intensively transmit toward the radiation plate of the second antenna element. Therefore, the radio waves radiated from the first antenna element and the radio waves radiated from the second antenna element are superimposed to increase the antenna gain. Further, the configuration causes the radio waves radiated from the antenna elements to produce resonance at a predetermined frequency and produce secondary resonance at a frequency different from the resonance frequency. That is, the antenna gain increases over a wide frequency range.

In the electronic apparatus according to the aspect, the ground plate may be attached to the casing of the electronic apparatus outside the system by being wound around the casing.

This configuration allows the electronic apparatus to be easily attached to and detached from the electronic apparatus outside the system. That is, the configuration is highly convenient.

### EFFECT OF THE INVENTION

According to the present invention, it is possible to provide a technique for reducing a size of an electronic apparatus including an antenna, an element, and a circuit board on which the element is mounted, the element or the circuit board being located near the antenna, while suppressing deterioration of antenna characteristics.

### BRIEF DESCRIPTION OF THE DRAWINGS

Fig. 1 schematically illustrates an example of a perspective view of an electronic apparatus.
Fig. 2 schematically illustrates an example of a cross-sectional view of the electronic apparatus.
Fig. 3 shows an example of an outline of a cut-out portion of a radiation plate when viewed in a thickness direction of the radiation plate with a short wall positioned on the upside.
Fig. 4 schematically illustrates an example of a flowchart showing an outline of operation of the electronic apparatus.
Fig. 5 shows an example of a comparison of results of measuring the intensity of radio waves radiated from an antenna element known in the related art and the intensity of radio waves radiated from the electronic apparatus according to an embodiment.
Fig. 6 schematically illustrates an example of a cross-section of an electronic apparatus.
Fig. 7 schematically illustrates an example of a cross-section of an electronic apparatus.
Fig. 8 schematically illustrates an example of a cross-section of an electronic apparatus.
Fig. 9 schematically illustrates an example of a perspective view of an electronic apparatus.

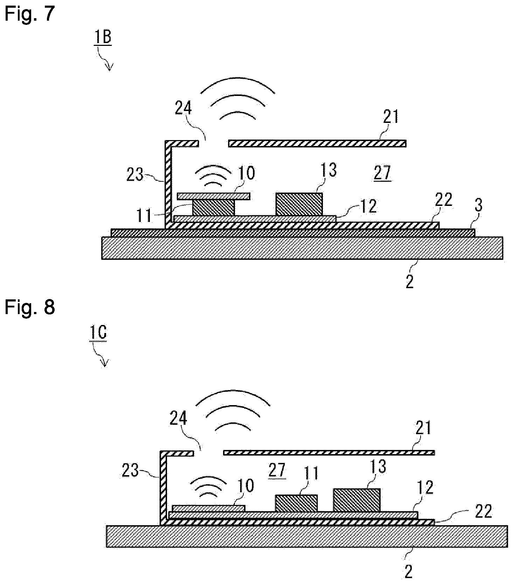

Figure 7 does not have all the claimed features but is useful for understanding the invention.

### MODE FOR CARRYING OUT THE INVENTION

Hereinafter, an embodiment according to an aspect of the present invention (hereinafter, also referred to as "the embodiment") will be described with reference to the drawings. However, the embodiment described below is merely illustrative of the present invention in all respects. It is needless to say that various improvements or modifications may be made without departing from the scope of the present invention. That is, in order to put the present invention into practice, a specific configuration according to the embodiment may be employed as needed.

### 1. Application example

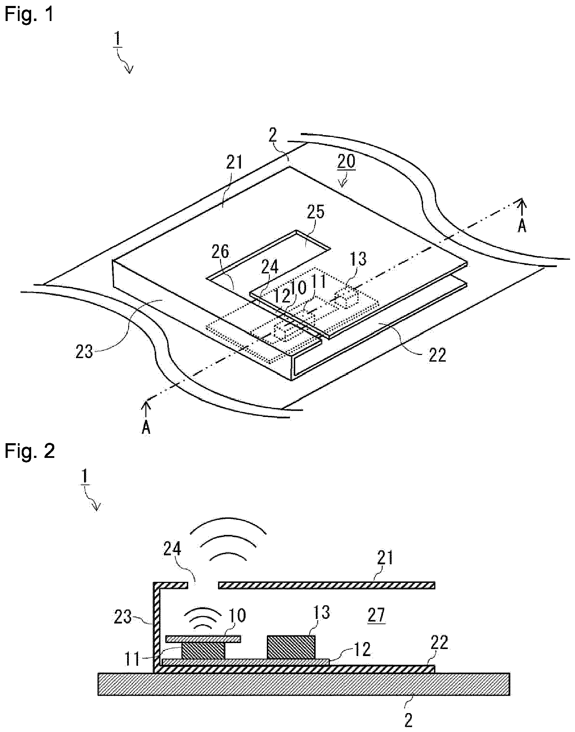

A description will be given of an example of a case where the present invention is applied with reference to Figs. 1 and 2. Fig. 1 schematically illustrates an example of a perspective view of an electronic apparatus 1. Fig. 2 schematically illustrates an example of a cross-sectional view taken along a line A-A shown in Fig. 1. The electronic apparatus 1 includes an antenna element 10 and a booster antenna 20.

The booster antenna 20 includes a radiation plate 21 that radiates radio waves, a ground plate 22, and a short wall 23 that short-circuits the radiation plate and the ground plate 22. Further, the antenna element 10 is provided inside the booster antenna 20. Further, the radiation plate 21 includes a predetermined cut-out portion, and is provided above the antenna element 10.

That is, the electronic apparatus 1 as described above causes radio waves radiated from the antenna element 10 and radio waves radiated from the radiation plate 21 of the booster antenna 20 to be superimposed to increase an antenna gain. In other words, even when a predetermined element or the circuit board provided near the antenna element 10 has adverse effects of deteriorating the antenna characteristics, such as a reduction in antenna gain and an impedance mismatch, the electronic apparatus 1 can relatively reduce such adverse effects. Further, an adverse effect, on the antenna characteristics, of noise generated by electromagnetic waves or heat emitted from the predetermined element or the circuit board is also relatively reduced.

Further, the electronic apparatus 1 as described above is designed to have the antenna element 10 placed inside the booster antenna 20. This brings the electronic apparatus 1 down in profile. That is, the electronic apparatus 1 as described above allows a reduction in size while suppressing deterioration of the antenna characteristics.

### 2 Configuration example

Next, a description will be given of an example of the electronic apparatus according to the embodiment.

As shown in Figs. 1 and 2, the electronic apparatus 1 includes the antenna element 10 and the booster antenna 20. Here, the antenna element 10 is an example of a "first antenna element" according to the present invention. Further, the booster antenna 20 is an example of a "second antenna element" according to the present invention.

The antenna element 10 and the booster antenna 20 of the electronic apparatus 1 according to the embodiment are, for example, antennas capable of transmitting and receiving radio waves over the ultra-high frequency (UHF) band. However, the frequency band of radio waves that can be transmitted and received by the antenna element 10 and the booster antenna 20 is not limited to the UHF band.

The booster antenna 20 includes the radiation plate 21 that radiates radio waves, the ground plate 22, and the short wall 23 that short-circuits the radiation plate 21 and the ground plate 22. The radiation plate 21 is provided facing the ground plate 22. Further, the short wall 23 is provided on sides of the radiation plate 21 and the ground plate 22, and short-circuits the radiation plate 21 and the ground plate 22. Further, the booster antenna 20 is irradiated with radio waves for power supply and communication from an external apparatus (not illustrated). Further, the radiation plate 21, the ground plate 22, and the short wall 23 may be each made of any plate-shaped conductor such as a copper plate. The booster antenna 20 is a so-called planar inverted-F antenna (PIFA). Further, a space 27 defined by the radiation plate 21, the ground plate 22, and the short wall 23 is filled with air. Here, the radiation plate 21 is an example of a "radiation plate" according to the present invention. The ground plate 22 is an example of a "ground plate" according to the present invention. The short wall 23 is an example of a "short-circuit member" according to the present invention.

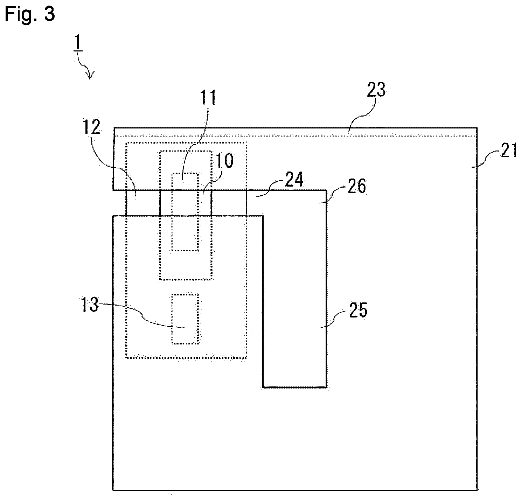

Fig. 3 shows an example of an outline of the cut-out portion of the radiation plate 21 when viewed in the thickness direction of the radiation plate 21 with the short wall 23 positioned on the upside. As shown in Fig. 3, the radiation plate 21 includes a first cut-out portion 24 and a second cut-out portion 25. The first cut-out portion 24 extends, in the radiation plate 21, from an upper left portion of the radiation plate 21 along the short wall 23. The second cut-out portion 25 extends, in the radiation plate 21, from an end portion 26 of the first cut-out portion 24 in a direction perpendicular to the cut-out direction of the first cut-out portion 24 and away from the short wall 23. That is, providing the first cut-out portion 24 and the second cut-out portion 25 in the radiation plate 21 allows the booster antenna 20 to have a longer current path.

The electronic apparatus 1 further includes a circuit board 12. The circuit board 12 is placed inside the booster antenna 20 and attached to the ground plate 22 so as to bring its underside opposite from its mounting surface on which components are mounted into contact with a surface of the ground plate 22. Note that, when a metal pattern is provided on the underside of the circuit board opposite from the mounting surface, the underside opposite from the mounting surface may be coated with an insulator. The circuit board may be made from, for example, a glass epoxy resin. Further, the circuit board 12 includes a wiring pattern that electrically connects the components mounted on the circuit board.

The electronic apparatus 1 further includes an RFIC 11 that performs signal processing on radio frequency (RF) signals transmitted and received via the antenna element 10. The antenna element 10 is integrally provided on top of the RFIC 11. The antenna element 10 and the RFIC 11 are mounted on the circuit board 12. That is, the antenna element 10 is provided inside the booster antenna 20. Further, the radiation plate 21 is located above the antenna element 10.

Further, when viewed in the thickness direction of the radiation plate 21 with the short wall 23 positioned on the upside, the antenna element 10 is located behind a left side of the cut-out portion 24 relative to the end portion 26 of the first cut-out portion 24.

The electronic apparatus 1 further includes a sensor element 13. The sensor element 13 is mounted on the circuit board 12.

The electronic apparatus 1 further includes a casing 2 that accommodates the booster antenna 20. The casing 2 is made from, for example, synthetic plastic serving as an insulator. The ground plate 22 is attached to an inner wall of the casing 2 with, for example, a bonding agent. However, the attachment of the casing 2 is not limited to the attachment with the bonding agent, and the ground plate 22 may be attached to the casing 2 with a screw or nut. Further, at least some of the electronic apparatus 1 may be formed by a 3D printer and provided on the casing 2. Further, the ground plate 22 may be in contact with at least some of the casing 2.

### 3 Operation example

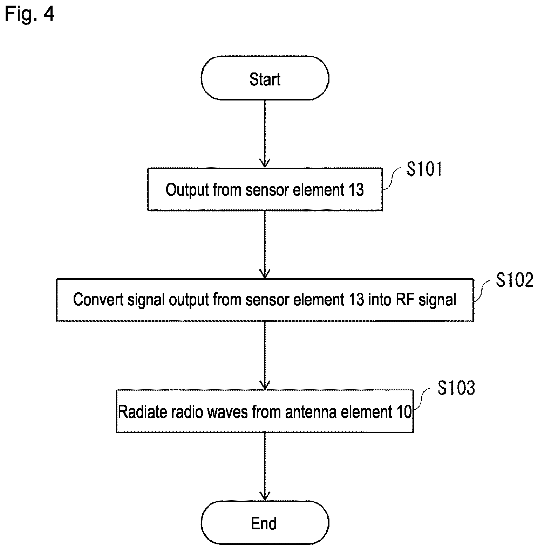

Next, a description will be given of an operation example of the electronic apparatus 1. Fig. 4 schematically illustrates an example of a flowchart showing an outline of operation in which a signal output from the sensor element 13 is transmitted to the outside of the system via the antenna element 10.

### (Step S101)

In step S101, the sensor element 13 detects a physical quantity of a to-be-detected object. Then, a signal representing the physical quantity is output from the sensor element 13 and transmitted to the RFIC 11 through the wiring pattern provided on the circuit board 12.

### (Step S102)

In step S102, the signal received from the sensor element 13 in the RFIC 11 is modulated into an RF signal. Then, the RF signal is transmitted to the antenna element 10.

### (Step S103)

In step S103, the antenna element 10 radiates radio waves in accordance with the RF signal received from the RFIC 11. The radio waves radiated from the antenna element 10 are superimposed on radio waves radiated from the radiation plate of the booster antenna 20 and then radiated to the outside of the system.

It goes without saying that, in the above-described operation example, the output signal output from the sensor element 13 is converted into radio waves, and then the radio waves are radiated from the antenna element 10, but the signal serving as a basis of the radio waves radiated from the antenna element 10 is not limited to the output signal output from the sensor element 13.

Further, in the above-described operation example of the electronic apparatus 1, an example where the signal output from the sensor element 13 is transmitted to the outside of the system via the antenna element 10 has been described, but the electronic apparatus 1 can receive radio waves from the outside the system via the antenna element 10 or the booster antenna 20. Further, the electronic apparatus 1 can convert the radio waves thus received into DC power and supply the DC power to the RFIC 11 or the sensor element 13.

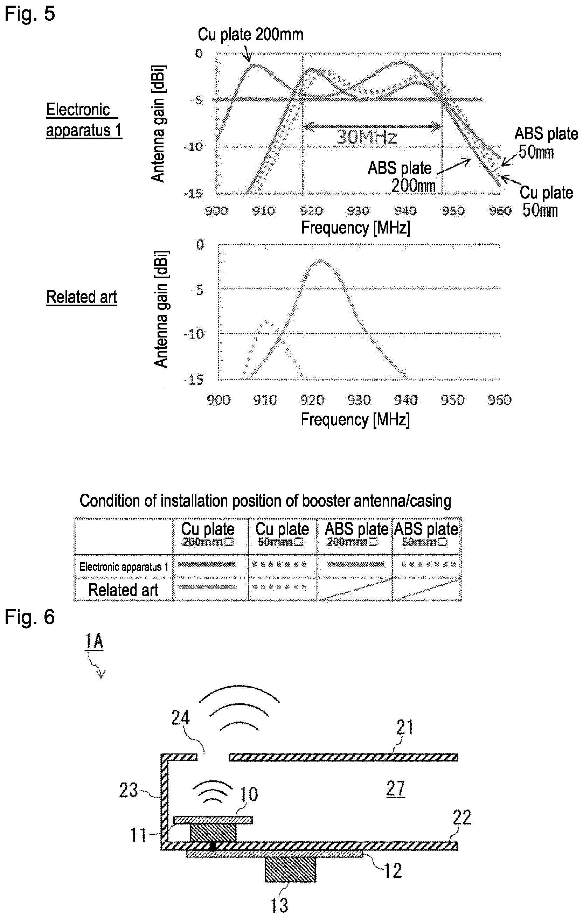

Fig. 5 shows an example of a comparison of results of measuring the intensity of radio waves radiated from an antenna element known in the related art and the intensity of radio waves radiated from the booster antenna 20 in response to the radio waves emitted from the antenna element 10 according to the embodiment. Fig. 5 shows that the radio waves radiated from the booster antenna 20 in response to the radio waves emitted from the antenna element 10 according to the embodiment are higher in antenna gain than the radio waves radiated from the antenna element known in the related art. It is further shown that only one resonance peak appears in the radio waves radiated from the antenna element known in the related art, whereas a plurality of resonance peaks appears for the electronic apparatus 1 according to the embodiment. Further, the plurality of resonance peaks is approximately 30 MHz apart from each other. That is, the electronic apparatus 1 according to the embodiment allows an increase in antenna gain over a wide frequency range.

Further, as shown in Fig. 5, in the electronic apparatus 1 according to the embodiment, it is shown that the antenna gain characteristics are more stable even when a material or size of a member on which the antenna element 10 is installed changes. This makes the electronic apparatus 1 according to the embodiment applicable regardless of conditions such as the material and size of the member on which the antenna element 10 is installed.

### [Action and Effect]

In the electronic apparatus 1 as described above, the radiation plate 21 of the booster antenna 20 is located in a traveling direction of the radio waves radiated from the antenna element 10. This causes the radio waves radiated from the antenna element 10 and the radio waves radiated from the booster antenna 20 to be superimposed to increase the antenna gain.

Further, in the electronic apparatus 1 as described above, the radiation plate 21 includes the first cut-out portion 24 and the second cut-out portion 25. This allows the radiation plate 21 to have a longer current path. Therefore, as shown in Fig. 5, the radio waves radiated from the antenna element 10 of the electronic apparatus 1 produce resonance at a predetermined frequency and produce secondary resonance at a frequency different from the resonance frequency. That is, the antenna gain increases over a wide frequency range.

Further, the electronic apparatus 1 as described above is designed to have the antenna element 10 placed inside the booster antenna 20. This brings the electronic apparatus 1 down in profile. That is, the electronic apparatus 1 as described above allows a reduction in size while suppressing deterioration of the antenna characteristics.

Further, the electronic apparatus 1 as described above includes the RFIC 11 that performs signal processing on the RF signal transmitted and received via the antenna element 10, the sensor element 13, and the circuit board 12 on which the RFIC 11 and the sensor element 13 are mounted. Therefore, in the electronic apparatus 1 as described above, the RFIC 11, the sensor element 13, or the circuit board 12 may have adverse effects of deteriorating the antenna characteristics, such as a reduction in antenna gain and an impedance mismatch. However, since the electronic apparatus 1 as described above allows an increase in antenna gain over a wide frequency range, even when the RFIC 11, the sensor element 13, or the circuit board 12 has adverse effects of deteriorating the antenna characteristics, such as a reduction in antenna gain and an impedance mismatch, the electronic apparatus 1 relatively reduces such adverse effects. Further, the RFIC 11, the sensor element 13, or the circuit board 12 emits electromagnetic waves or heat, but an adverse effect, on the antenna characteristics, of noise generated by the electromagnetic waves or heat is also relatively reduced. That is, even when the RFIC 11, the sensor element 13, or the circuit board 12 is provided near the antenna element 10, the electronic apparatus 1 as described above allows a reduction in size while suppressing deterioration of the antenna characteristics.

Further, the electronic apparatus 1 as described above can convert, into DC power, the radio waves received via the antenna element 10 or the booster antenna 20 and supply the DC power to the RFIC 11 or the sensor element 13 mounted on the circuit board 12. In other words, the electronic apparatus 1 as described above need not include a battery used for bringing the RFIC 11 or the sensor element 13 into operation. This allows a reduction in size of the electronic apparatus 1.

Further, in the electronic apparatus 1 as described above, the antenna element 10 is integrally provided on top of the RFIC 11. This allows the RFIC 11 and the antenna element 10 to be mounted on the circuit board 12 by a single action. This in turn allows a reduction in manufacturing cost of the electronic apparatus 1 as described above.

### 4. Modification

Although the embodiment of the present invention has been described in detail, the above description is merely illustrative of the present invention in all respects. It is needless to say that various improvements or modifications may be made without departing from the scope of the present invention. For example, the following modifications may be made. In the following, the same reference numerals will be assigned to the same components as in the above-described embodiment, and no description will be given as needed of the same points as in the above-described embodiment. The following modifications may be combined as needed.

### <4.1 >

Fig. 6 schematically illustrates an example of a cross section of an electronic apparatus 1A. The electronic apparatus 1A is similar in configuration requirement to the electronic apparatus 1 and operates in a similar manner to the electronic apparatus 1. The electronic apparatus 1A is different from the electronic apparatus 1 in that the circuit board 12 is provided on the outside of the booster antenna 20 in the electronic apparatus 1A. The circuit board 12 is attached to the ground plate 22 so as to bring its underside opposite from its mounting surface on which the sensor element 13 is mounted into contact with the surface of the ground plate 22.

Further, the antenna element 10 and the RFIC 11 are attached to the surface of the ground plate 22 inside the booster antenna 20. Then, the RFIC 11 and the wiring pattern provided on the circuit board 12 are electrically connected.

### [Action and Effect]

In the electronic apparatus 1A as described above, a distance between the antenna element 10 and the circuit board 12 is larger. This allows the electronic apparatus 1A to reduce adverse effects, due to the circuit board 12 or the sensor element 13 mounted on the circuit board 12, of deteriorating the antenna characteristics, such as a reduction in antenna gain and an impedance mismatch. This further reduces an adverse effect, on the radio waves radiated from the antenna element 10, of noise generated by heat or electromagnetic waves emitted from the circuit board 12 or the sensor element 13 mounted on the circuit board 12. That is, deterioration of the antenna characteristics of the electronic apparatus 1 is suppressed.

### <4.2>

Fig. 7 schematically illustrates an example of a cross section of an electronic apparatus 1B. The electronic apparatus 1B includes a copper plate 3 in addition to the components of the electronic apparatus 1. Here, the copper plate 3 is an example of a "conductor" according to the present invention. The copper plate 3 is provided between the ground plate 22 and the casing 2. Further, the radiation plate 21 is made smaller in size than the ground plate 22 to reduce the size of the electronic apparatus 1B.

### [Action and Effect]

The electronic apparatus 1B as described above causes the radio waves radiated from the antenna element 10 to intensively transmit toward the radiation plate of the booster antenna 20. This causes the radio waves radiated from the antenna element 10 and the radio waves radiated from the booster antenna 20 to be superimposed to increase the antenna gain. Further, as shown in Fig. 5, it is shown that, when the electronic apparatus 1 is provided in contact with a copper plate having a thickness of 200 mm, the electronic apparatus 1 tends to cause the radio waves radiated from the antenna element to produce resonance at a predetermined frequency and produce secondary resonance at a frequency different from the resonance frequency to increase the antenna gain over a wider frequency range. Therefore, in the above-described electronic apparatus 1B, the radiation plate 21 is made smaller in size than the ground plate 22, but deterioration of the antenna characteristics is suppressed. That is, in the above-described electronic apparatus 1B, deterioration of the antenna characteristics is suppressed with the radiation plate 21 of the booster antenna 20 reduced in area.

### <4.3>

Fig. 8 schematically illustrates an example of a cross section of an electronic apparatus 1C. The electronic apparatus 1C is similar in configuration requirement to the electronic apparatus 1 and operates in a similar manner to the electronic apparatus 1. The electronic apparatus 1C is different from the electronic apparatus 1 in that the antenna element 10 is not integrally provided with the RFIC 11 on top of the RFIC 11 in the electronic apparatus 1C. In the electronic apparatus 1C, the antenna element 10 is provided by being printed directly on the circuit board 12 separately from the RFIC 11.

### [Action and Effect]

The above-described configuration allows a reduction in manufacturing cost of the antenna element 10. Further, the resultant reduction in height of the antenna element 10 from the mounting surface of the circuit board 12 allows a reduction in profile of the booster antenna 20 in which the antenna element 10 is placed. That is, this allows a reduction in size of the electronic apparatus 1C.

### <4.4>

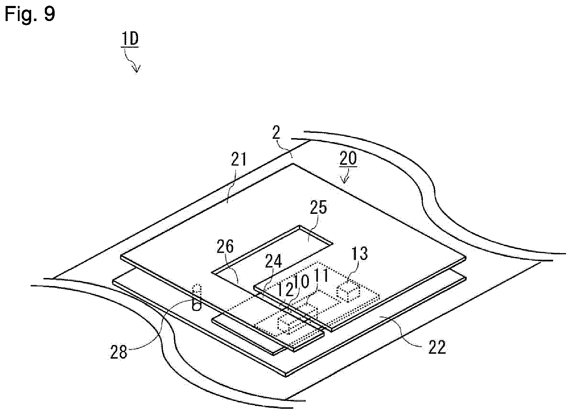

Fig. 9 schematically illustrates an example of a perspective view of an electronic apparatus 1D. The electronic apparatus 1D does not include the short wall 23 the electronic apparatus 1 includes. Instead, the electronic apparatus 1D includes a short-circuit pin 28 that has a pole shape and short-circuits the radiation plate 21 and the ground plate 22. Here, the short-circuit pin 28 is an example of the "short-circuit member" according to the present invention. The electronic apparatus 1D is the same in other configuration as the electronic apparatus 1.

In the electronic apparatus 1D as described above, the radiation plate 21 of the booster antenna 20 is located in the traveling direction of the radio waves radiated from the antenna element 10. This causes the radio waves radiated from the antenna element 10 and the radio waves radiated from the booster antenna 20 to be superimposed to increase the antenna gain.

Further, in the electronic apparatus 1D as described above, the radiation plate 21 includes the first cut-out portion 24 and the second cut-out portion 25. This allows the radiation plate 21 to have a longer current path. Therefore, the radio waves radiated from the electronic apparatus 1D produce resonance at a predetermined frequency and produce secondary resonance at a frequency different from the resonance frequency. That is, the antenna gain increases over a wide frequency range.

Further, the electronic apparatus 1D as described above is designed to have the antenna element 10 placed inside the booster antenna 20. This brings the electronic apparatus 1D down in profile. That is, the electronic apparatus 1D as described above allows a reduction in antenna size while suppressing deterioration of the antenna characteristics.

Further, the electronic apparatus 1D as described above includes the RFIC 11 that performs signal processing on the RF signal transmitted and received via the antenna element 10, the sensor element 13, and the circuit board 12 on which the RFIC 11 and the sensor element 13 are mounted. Therefore, in the electronic apparatus 1D as described above, the RFIC 11, the sensor element 13, or the circuit board 12 may have adverse effects of deteriorating the antenna characteristics, such as a reduction in antenna gain and an impedance mismatch. However, since the electronic apparatus 1D as described above allows an increase in antenna gain over a wide frequency range, even when the RFIC 11, the sensor element 13, or the circuit board 12 has adverse effects of deteriorating the antenna characteristics, such as a reduction in antenna gain and an impedance mismatch, the electronic apparatus 1D relatively reduces such adverse effects. Further, the RFIC 11, the sensor element 13, or the circuit board 12 emits electromagnetic waves or heat, but an adverse effect, on the antenna characteristics, of noise generated by the electromagnetic waves or heat is also relatively reduced. That is, even when the RFIC 11, the sensor element 13, or the circuit board 12 on which the RFIC 11 and the sensor element 13 are mounted is provided near the antenna element 10, it is possible to reduce the antenna size while suppressing deterioration of the antenna characteristics.

Further, the electronic apparatus 1D as described above can convert, into DC power, the radio waves received via the antenna element 10 or the booster antenna 20 and supply the DC power to the RFIC 11 or the sensor element 13 mounted on the circuit board 12. In other words, the electronic apparatus 1D as described above need not include a battery used for bringing the RFIC 11 or the sensor element 13 into operation. This allows a reduction in size of the electronic apparatus 1D.

Further, in the electronic apparatus 1D as described above, the antenna element 10 is integrally provided on top of the RFIC 11. This allows the RFIC 11 and the antenna element 10 to be mounted on the circuit board 12 by a single action. This in turn allows a reduction in manufacturing cost of the electronic apparatus 1D as described above.

### <Other modifications>

Further, the electronic apparatus 1 according to the embodiment may be used with being attached to an attachment-target apparatus outside the system. Here, the attachment-target apparatus is an example of an "electronic apparatus outside the system" according to the present invention. Further, the electronic apparatus 1 need not include the casing 2. The electronic apparatus 1 may include a component that is detachably attached to a casing of the attachment-target apparatus. The component that is detachably attached may be, for example, a component that is fitted to and engaged with the casing of the attachment-target apparatus or a bonding agent. Further, in the electronic apparatus 1, the frequency range over which the antenna gain increases may be adjusted through an adjustment to dimensions of components constituting the electronic apparatus 1. With such an electronic apparatus 1, for example, when a user who uses the attachment-target apparatus visits a plurality of foreign countries and a frequency used differs for each country, the user can select the electronic apparatus 1 that has been adjusted in dimensions so as to increase the antenna characteristics over a frequency range used in a country the user visits and attach the electronic apparatus 1 to the casing of the attachment-target apparatus. This makes the electronic apparatus 1 highly convenient.

When the attachment-target apparatus to which the electronic apparatus 1 is attached includes a conductor such as a copper plate, the electronic apparatus 1 may be attached to the attachment-target apparatus with the ground plate 22 and the copper plate of the attachment-target apparatus electrically connected. Here, the copper plate included in the attachment-target apparatus is an example of a "second conductor" according to the present invention. Such a configuration causes the radio waves radiated from the antenna element 10 to intensively transmit toward the radiation plate 21 of the booster antenna 20. This causes the radio waves radiated from the antenna element 10 and the radio waves radiated from the booster antenna 20 to be superimposed to increase the antenna gain. Further, the configuration causes the radio waves radiated from the antenna element 10 to produce resonance at a predetermined frequency and produce secondary resonance at a frequency different from the resonance frequency. That is, the antenna gain increases over a wide frequency range.

Further, the ground plate 22 of the electronic apparatus 1 may be made of copper foil. The electronic apparatus 1 may be attached by winding the ground plate 22 around the casing of the attachment-target apparatus. Such an electronic apparatus 1 is easily attached to and detached from the attachment-target apparatus. That is, the configuration is highly convenient. Further, when the ground plate 22 is attached by being wound around the casing of the attachment-target apparatus, and the components are exposed on the surface of the ground plate 22, the casing of the attachment-target apparatus may have a flexible surface so as to be deformed along the outer shapes of the components.

Further, in the above-described electronic apparatus, the radiation plate 21 is larger in size than the ground plate 22. Such an electronic apparatus 1 causes the radio waves radiated from the antenna element 10 and the radio waves radiated from the booster antenna 20 to be superimposed to increase the antenna gain.

Further, the periphery of the casing 2 to which the ground plate 22 of the electronic apparatus 1 is attached may be raised. Even such an electronic apparatus 1 allows an increase in antenna characteristics.

Further, the space 27 defined by the radiation plate 21, the ground plate 22, and the short wall 23 may be filled with a solid dielectric substance other than air. Such an electronic apparatus can easily maintain its shape unchanged against pressure applied toward the inside of the electronic apparatus from the outside and suppress deterioration of the antenna characteristics due to a change in shape.

Further, in the above-described electronic apparatus, the element mounted on the mounting surface of the circuit board 12 is not limited to the RFIC 11 or the sensor element 13. For example, an element such as a light emission diode (LED) may be mounted. The radio waves received via the antenna element 10 or the booster antenna 20 may be converted into DC power, and the DC power may be supplied to the element mounted on the mounting surface of the circuit board 12.

Further, the shape of the cut-out portion provided in the radiation plate 21 is not limited to the above-described shape. The shape of the cut-out portion may be, for example, a T-shape, I-shape, or U-shape. Even the cut-out portion with such a shape allows the booster antenna 20 to have a longer current path. Therefore, the radio waves radiated from the above-described electronic apparatus produce resonance at a predetermined frequency and produce secondary resonance at a frequency different from the resonance frequency. That is, the antenna gain increases over a wide frequency range.

Further, in the above-described embodiment, an example where the antenna element 10 is integrally provided on top of the RFIC 11 has been described, but the antenna element 10 may be integrally provided, for example, inside of an element mounted on the circuit board 12.

Further, the antenna element 10 may be an exciting element or a non-exciting element.

The embodiment and modifications disclosed above may be combined with each other.

Note that, in order to allow a comparison between the configuration requirement of the present invention and the configuration of the embodiment, the configuration requirement of the present invention will be described with the reference numerals used in the drawings.

### DESCRIPTION OF SYMBOLS

- 1, 1A, 1B, 1C, 1D: electronic apparatus
- 2: casing
- 3: copper plate
- 10: antenna element
- 11: RFIC
- 12: circuit board
- 13: sensor element
- 20: booster antenna
- 21: radiation plate
- 22: ground plate
- 23: short wall
- 24: first cut-out portion
- 25: second cut-out portion
- 26: end portion
- 27: space
- 28: short-circuit pin

## Claims

1. An electronic apparatus (1) comprising:
a first antenna element (10);
a second antenna element (20) comprising a ground plate (22), a radiation plate (21) provided facing the ground plate (22), and a short-circuit member (23), the radiation plate (21) being configured to radiate radio waves, the short-circuit (23) member configured to short-circuit the radiation plate (21) and the ground plate (22); and
a circuit board (12) on which a wiring pattern electrically connected to the first antenna element (10) is provided and a predetermined element is mounted, wherein
the first antenna element (10) is provided between the ground plate (22) and the radiation plate (21), and
the radiation plate (21) is configured to receive radio waves emitted from the first antenna element (10) and to radiate the radio waves,
wherein the radiation plate (21) is larger in size than the ground plate (22).

2. The electronic apparatus (1) according to claim 1, wherein
the short-circuit member (23) is a plate-shaped member, and
the short-circuit member (23) is provided on sides of the ground plate (22) and the radiation plate (21).

3. The electronic apparatus (1) according to claim 1, wherein
the short-circuit member (23) is a pole-shaped member.

4. The electronic apparatus (1) according to claim 2 or 3, wherein
the radiation plate (21) comprises a cut-out portion, and
when the first antenna element (10) is viewed from a position where the radiation plate (21) is provided, the first antenna element (10) is provided behind the cut-out portion.

5. The electronic apparatus (1) according to any one of claims 1 to 4, wherein
the circuit board (12) is provided inside the second antenna element (20), the circuit board (12) having an underside in contact with a surface of the ground plate (22), the underside being opposite from a mounting surface on which the predetermined element is mounted,
the predetermined element is mounted on the mounting surface of the circuit board (12),
the first antenna element (10) is provided integrally with the predetermined element (13), and
the predetermined element is configured to perform signal processing on a signal transmitted and received via the first antenna element (10).

6. The electronic apparatus (1) according to any one of claims 1 to 4, wherein
the circuit board (12) is provided inside the second antenna element (20), the circuit board (12) having an underside in contact with a surface of the ground plate (22), the underside being opposite from a mounting surface on which the predetermined element is mounted, and
the first antenna element (10) is provided on the mounting surface of the circuit board (12).

7. The electronic apparatus (1) according to any one of claims 1 to 4, wherein
the circuit board (12) is provided on an outside of the second antenna element (20), the circuit board (12) having an underside in contact with a surface of the ground plate (22), the underside being opposite from a mounting surface on which the predetermined element is mounted.

8. The electronic apparatus (1) according to any one of claims 1 to 7, further comprising a conductor in contact with the ground plate.

9. The electronic apparatus (1) according to any one of claims 1 to 8, wherein
the ground plate (22) is configured to be attached to a casing (2) of an electronic apparatus outside a system, and
the ground plate (22) is configured to be detachably attached to the electronic apparatus outside the system.

10. The electronic apparatus (1) according to claim 9, wherein
the ground plate (22) is configured to be electrically connected to a second conductor comprised in the electronic apparatus outside the system.

11. The electronic apparatus (1) according to claim 9 or 10, wherein
the ground plate (22) is configured to be attached to the casing of the electronic apparatus outside the system by being wound around the casing (2).

## Patentansprüche

1. Elektronische Vorrichtung (1), umfassend:
ein erstes Antennenelement (10);
ein zweites Antennenelement (20), das eine Grundplatte (22), eine Strahlungsplatte (21), die der Grundplatte (22) zugewandt angeordnet ist, und ein Kurzschlusselement (23) umfasst, wobei die Strahlungsplatte (21) dafür eingerichtet ist, Funkwellen abzustrahlen, und das Kurzschlusselement (23) dafür eingerichtet ist, die Strahlungsplatte (21) und die Grundplatte (22) kurzzuschließen; und
eine Leiterplatte (12), auf der eine Verdrahtungsstruktur, die elektrisch mit dem ersten Antennenelement (10) verbunden ist, angeordnet ist und ein zuvor festgelegtes Element montiert ist, wobei
das erste Antennenelement (10) zwischen der Grundplatte (22) und der Strahlungsplatte (21) angeordnet ist und
die Strahlungsplatte (21) dafür eingerichtet ist, von dem ersten Antennenelement (10) ausgesendete Funkwellen zu empfangen und die Funkwellen abzustrahlen,
wobei die Strahlungsplatte (21) größer ist als die Grundplatte (22) .

2. Elektronische Vorrichtung (1) nach Anspruch 1, wobei
das Kurzschlusselement (23) ein plattenförmiges Element ist und
das Kurzschlusselement (23) an Seiten der Grundplatte (22) und der Strahlungsplatte (21) angeordnet ist.

3. Elektronische Vorrichtung (1) nach Anspruch 1, wobei
das Kurzschlusselement (23) ein säulenförmiges Element ist.

4. Elektronische Vorrichtung (1) nach Anspruch 2 oder 3, wobei
die Strahlungsplatte (21) einen ausgeschnittenen Abschnitt umfasst und,
wenn das erste Antennenelement (10) von einer Position aus betrachtet wird, wo sich die Strahlungsplatte (21) befindet, das erste Antennenelement (10) hinter dem ausgeschnittenen Abschnitt angeordnet ist.

5. Elektronische Vorrichtung (1) nach einem der Ansprüche 1 bis 4, wobei
die Leiterplatte (12) im Inneren des zweiten Antennenelements (20) angeordnet ist, wobei die Leiterplatte (12) eine Unterseite aufweist, die mit einer Fläche der Grundplatte (22) in Kontakt steht, wobei die Unterseite einer Montagefläche, an der das zuvor festgelegte Element montiert ist, gegenüberliegt,
das zuvor festgelegte Element an der Montagefläche der Leiterplatte (12) montiert ist,
das erste Antennenelement (10) integral mit dem zuvor festgelegten Element (13) ausgebildet ist und
das zuvor festgelegte Element dafür eingerichtet ist, eine Signalverarbeitung an einem Signal durchzuführen, das über das erste Antennenelement (10) gesendet und empfangen wird.

6. Elektronische Vorrichtung (1) nach einem der Ansprüche 1 bis 4, wobei
die Leiterplatte (12) im Inneren des zweiten Antennenelements (20) angeordnet ist, wobei die Leiterplatte (12) eine Unterseite aufweist, die mit einer Fläche der Grundplatte (22) in Kontakt steht, wobei die Unterseite einer Montagefläche, an der das zuvor festgelegte Element montiert ist, gegenüberliegt, und
das erste Antennenelement (10) an der Montagefläche der Leiterplatte (12) angeordnet ist.

7. Elektronische Vorrichtung (1) nach einem der Ansprüche 1 bis 4, wobei
die Leiterplatte (12) an einer Außenseite des zweiten Antennenelements (20) angeordnet ist, wobei die Leiterplatte (12) eine Unterseite aufweist, die mit einer Fläche der Grundplatte (22) in Kontakt steht, wobei die Unterseite einer Montagefläche, an der das zuvor festgelegte Element montiert ist, gegenüberliegt.

8. Elektronische Vorrichtung (1) nach einem der Ansprüche 1 bis 7, des Weiteren umfassend einen Leiter in Kontakt mit der Grundplatte.

9. Elektronische Vorrichtung (1) nach einem der Ansprüche 1 bis 8, wobei
die Grundplatte (22) dafür eingerichtet ist, an einem Gehäuse (2) einer elektronischen Vorrichtung außerhalb eines Systems angebracht zu werden, und
die Grundplatte (22) dafür eingerichtet ist, abnehmbar an der elektronischen Vorrichtung außerhalb des Systems angebracht zu werden.

10. Elektronische Vorrichtung (1) nach Anspruch 9, wobei
die Grundplatte (22) dafür eingerichtet ist, elektrisch mit einem zweiten Leiter verbunden zu werden, der in der elektronischen Vorrichtung außerhalb des Systems angeordnet ist.

11. Elektronische Vorrichtung (1) nach Anspruch 9 oder 10, wobei die Grundplatte (22) dafür eingerichtet ist, an dem Gehäuse der elektronischen Vorrichtung außerhalb des Systems angebracht zu werden, indem sie um das Gehäuse (2) herum gelegt wird.

## Revendications

1. Appareil électronique (1) comprenant :
un premier élément d'antenne (10) ;
un second élément d'antenne (20) comprenant une plaque de masse (22), une plaque de rayonnement (21) faisant face à la plaque de masse (22) et un élément de court-circuit (23), la plaque de rayonnement (21) étant configurée pour rayonner des ondes radio, l'élément de court-circuit (23) étant configuré pour court-circuiter la plaque de rayonnement (21) et la plaque de masse (22) ; et
une carte de circuit imprimé (12) sur laquelle un schéma de câblage connecté électriquement au premier élément d'antenne (10) est prévu et un élément prédéterminé est monté, dans lequel
le premier élément d'antenne (10) est prévu entre la plaque de masse (22) et la plaque de rayonnement (21), et
la plaque de rayonnement (21) est configurée pour recevoir des ondes radio émises par le premier élément d'antenne (10) et pour rayonner les ondes radio,
dans lequel la plaque de rayonnement (21) est plus grande en taille que la plaque de masse (22).

2. Appareil électronique (1) selon la revendication 1, dans lequel
l'élément de court-circuit (23) est un élément en forme de plaque, et
l'élément de court-circuit (23) est prévu sur les côtés de la plaque de masse (22) et de la plaque de rayonnement (21).

3. Appareil électronique (1) selon la revendication 1, dans lequel
l'élément de court-circuit (23) est un élément en forme de poteau.

4. Appareil électronique (1) selon la revendication 2 ou 3, dans lequel
la plaque de rayonnement (21) comprend une partie découpée, et
lorsque le premier élément d'antenne (10) est vu depuis une position où la plaque de rayonnement (21) est prévue, le premier élément d'antenne (10) est prévu derrière la partie découpée.

5. Appareil électronique (1) selon l'une quelconque des revendications 1 à 4, dans lequel
la carte de circuit imprimé (12) est prévue à l'intérieur du second élément d'antenne (20), la carte de circuit imprimé (12) ayant une face inférieure en contact avec une surface de la plaque de masse (22), la face inférieure étant opposée à une surface de montage sur laquelle l'élément prédéterminé est monté,
l'élément prédéterminé est monté sur la surface de montage de la carte de circuit imprimé (12),
le premier élément d'antenne (10) est prévu d'un seul tenant avec l'élément prédéterminé (13), et
l'élément prédéterminé est configuré pour effectuer un traitement de signal sur un signal émis et reçu via le premier élément d'antenne (10).

6. Appareil électronique (1) selon l'une quelconque des revendications 1 à 4, dans lequel
la carte de circuit imprimé (12) est prévue à l'intérieur du second élément d'antenne (20), la carte de circuit imprimé (12) ayant une face inférieure en contact avec une surface de la plaque de masse (22), la face inférieure étant opposée à une surface de montage sur laquelle l'élément prédéterminé est monté, et
le premier élément d'antenne (10) est prévu sur la surface de montage de la carte de circuit imprimé (12).

7. Appareil électronique (1) selon l'une quelconque des revendications 1 à 4, dans lequel
la carte de circuit imprimé (12) est prévue à l'extérieur du second élément d'antenne (20), la carte de circuit imprimé (12) ayant une face inférieure en contact avec une surface de la plaque de masse (22), la face inférieure étant opposée à une surface de montage sur laquelle l'élément prédéterminé est monté.

8. Appareil électronique (1) selon l'une quelconque des revendications 1 à 7, comprenant en outre un conducteur en contact avec la plaque de masse.

9. Appareil électronique (1) selon l'une quelconque des revendications 1 à 8, dans lequel
la plaque de masse (22) est configurée pour être fixée à un boîtier (2) d'un appareil électronique à l'extérieur d'un système, et
la plaque de masse (22) est configurée pour être fixée de manière amovible à l'appareil électronique à l'extérieur du système.

10. Appareil électronique (1) selon la revendication 9, dans lequel
la plaque de masse (22) est configurée pour être connectée électriquement à un second conducteur compris dans l'appareil électronique à l'extérieur du système.

11. Appareil électronique (1) selon la revendication 9 ou 10, dans lequel
la plaque de masse (22) est configurée pour être fixée au boîtier de l'appareil électronique à l'extérieur du système en étant enroulée autour du boîtier (2).
